(19) **Europäisches Patentamt**
**European Patent Office**
**Office européen des brevets**

(11) **EP 2 659 325 B1**

(12) **EUROPÄISCHE PATENTSCHRIFT**

(45) Veröffentlichungstag und Bekanntmachung des Hinweises auf die Patenterteilung:
**29.08.2018   Patentblatt 2018/35**

(21) Anmeldenummer: **11804560.8**

(22) Anmeldetag: **21.12.2011**

(51) Int Cl.:
**G05D 23/24** (2006.01)

(86) Internationale Anmeldenummer:
**PCT/EP2011/073518**

(87) Internationale Veröffentlichungsnummer:
**WO 2012/089573 (05.07.2012 Gazette 2012/27)**

(54) **HAUSGERÄTEVORRICHTUNG**

DOMESTIC APPLIANCE APPARATUS

DISPOSITIF D'APPAREIL MÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010   EP 10382363**
**20.01.2011   ES 201130062**

(43) Veröffentlichungstag der Anmeldung:
**06.11.2013   Patentblatt 2013/45**

(73) Patentinhaber: **BSH Hausgeräte GmbH**
**81739 München (DE)**

(72) Erfinder:
 • **FRANCO GUTIERREZ, Carlos**
   **E-50017 Zaragoza (ES)**
 • **LLORENTE GIL, Sergio**
   **E-50009 Zaragoza (ES)**
 • **LOPEZ NICOLAS, Gonzalo**
   **E-50001 Zaragoza (ES)**
 • **PAESA GARCÍA, David**
   **E-50015 Zaragoza (ES)**
 • **SAGÜES BLÁZQUIZ, Carlos**
   **E-50018 Zaragoza (ES)**

(56) Entgegenhaltungen:
**WO-A1-2008/064446       WO-A2-2005/002195**
**DE-A1- 3 904 800          GB-A- 2 148 554**
**US-A- 4 969 459**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 659 325 B1

**Beschreibung**

Die Erfindung geht aus von einer Hausgerätevorrichtung nach dem Oberbegriff des Anspruchs 1.

Es sind Kochfeldvorrichtungen mit einer Sensoranordnung mit zumindest zwei Temperatursensoren bekannt, die zu einer Messung einer Kochgeschirrtemperatur vorgesehen sind.

Die GB 2 148 554 A offenbart eine Sensorvorrichtung für ein Gebäude oder einen Kühlschrank mit zwei Temperatursensoren.

Die Aufgabe der Erfindung besteht insbesondere darin, eine gattungsgemäße Vorrichtung mit verbesserten Eigenschaften hinsichtlich einer besonders vorteilhaften Temperaturbestimmung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Hausgerätevorrichtung, insbesondere einer Kochfeldvorrichtung, mit einer Sensoranordnung mit zumindest zwei Temperatursensoren, die jeweils zu einer Bestimmung einer Sensorkenngröße vorgesehen sind.

Es wird vorgeschlagen, dass die Hausgerätevorrichtung zumindest eine Auswerteeinheit aufweist, die zu einer Bestimmung einer Temperaturkenngröße durch eine Gewichtung von zumindest zwei der Sensorkenngrößen der zumindest zwei Temperatursensoren, die sich von einer reinen Mittelwertbildung unterscheidet, vorgesehen ist. Unter einer "Sensoranordnung" soll insbesondere eine Anordnung von Sensoren, vorzugsweise von Temperatursensoren, verstanden werden, die zu einer Überwachung eines in und/oder auf einem begrenzten Bereich positionierten Objekts, vorteilhaft eines Gefäßes, vorzugsweise eines Gargeschirrs, vorgesehen ist. Insbesondere sind die Sensoren der Sensoranordnung auch in einer Umgebung des begrenzten Bereichs angeordnet. Unter einem "begrenzten Bereich" soll insbesondere ein Bereich verstanden werden, der durch eine Reichweite einer Wirkung und/oder eine Größe eines Funktionselements, insbesondere einer Kühleinheit und/oder besonders bevorzugt einer Heizeinheit, begrenzt ist. Unter einer "Heizeinheit" soll insbesondere eine Einheit verstanden werden, die zumindest ein Heizelement aufweist. Bei dem begrenzten Bereich handelt es sich insbesondere um eine Kühlzone, Gefrierzone, Wärmezone und/oder besonders bevorzugt um eine Heizzone, insbesondere eine Kochzone eines Kochfelds. Insbesondere handelt es sich bei dem begrenzten Bereich um eine durch ein, insbesondere auf ein Matrixkochfeld aufgestelltes, Gargeschirr definierte Kochzone. Unter einem "Temperatursensor" soll insbesondere ein Sensor verstanden werden, der zumindest eine, von einer Messeinheit messbare, temperaturabhängige Kenngröße aufweist, deren Wert in einem Temperaturbereich von vorzugsweise -50 °C bis +250 °C eineindeutig einer Temperatur zugeordnet werden kann. Vorzugsweise handelt es sich bei der Kenngröße um einen elektrischen Widerstand, vorzugsweise den elektrischen Widerstand eines NTC-Widerstands. Ein NTC-Widerstand ist dabei zumindest teilweise von zumindest einem Material, vorzugsweise einem halbleitenden Material, mit negativem elektrischem Temperaturkoeffizienten gebildet und weist bei niedrigen Temperaturen einen höheren Widerstand auf als bei hohen Temperaturen. Vorzugsweise sind die Temperatursensoren zu einer Bestimmung einer Temperatur des Objekts vorgesehen. Unter einer "Sensorkenngröße" soll insbesondere eine Kenngröße eines der Temperatursensoren, vorzugsweise eine Sensortemperatur, verstanden werden. Insbesondere können die Temperatursensoren unterschiedliche thermische Kopplungen mit dem Objekt aufweisen. Unter einer "thermischen Kopplung" eines Temperatursensors mit einem Objekt soll insbesondere eine Kenngröße verstanden werden, die beschreibt, wie schnell sich die Temperatur des Temperatursensors an die Temperatur des Objekts anpasst. Die thermische Kopplung eines Temperatursensors mit dem Objekt ist insbesondere abhängig von einer Form des Objekts und/oder von einem Abstand des Temperatursensors zum Objekt und/oder insbesondere von einer Beschaffenheit zumindest eines Materials, vorzugsweise Luft, Kleber, Glaskeramik und/oder Borosilikatglas, das insbesondere zwischen dem Temperatursensor und dem Objekt angeordnet ist. Ein Temperatursensor mit einer guten thermischen Kopplung passt sich schneller an die Temperatur des Objekts an als ein Temperatursensor mit einer schlechten thermischen Kopplung. Ein Temperatursensor mit einer guten thermischen Kopplung ist insbesondere für eine Temperaturbestimmung des Objekts besser geeignet. Eine Temperatur "passt" ich sich insbesondere durch eine Wärmeübertragung, insbesondere Wärmeleitung und/oder Wärmestrahlung, zwischen dem Objekt und dem Temperatursensor an. Unterschiedliche Temperatursensoren zeigen Temperaturen, die unterschiedlich nahe an der Temperatur des Objekts liegen. Unter einer "Auswerteeinheit" soll insbesondere eine Einheit verstanden werden, die zu einer Auswertung von Sensorkenngrößen, die vorzugsweise von einer Messeinheit bestimmt wurden, vorgesehen ist. Insbesondere kann die Messeinheit als ein Teil der Auswerteeinheit ausgebildet sein. Vorzugsweise weist die Auswerteeinheit zumindest eine Speichereinheit und zumindest einen Prozessor auf. Unter einem "Prozessor" soll insbesondere eine Einheit verstanden werden, die dazu ausgelegt ist, ein in der Speichereinheit hinterlegtes Programm auszuführen. Unter einer "Temperaturkenngröße" soll insbesondere eine Kenngröße verstanden werden, die in einer eineindeutigen Abhängigkeit einer Temperatur, die insbesondere die Temperatur des Objekts repräsentiert, zugeordnet werden kann. Insbesondere stellt die Temperaturkenngröße eine Eigenschaft der Sensoranordnung dar. Insbesondere handelt es sich bei der Temperaturkenngröße um eine Temperatur. Insbesondere wird die bestimmte Temperaturkenngröße von der Auswerteeinheit an eine Anzeigeeinheit und/oder eine Steuerungseinheit weitergeleitet. Vorzugsweise entspricht die Temperaturkenngröße dem Wert der Gewichtung. Unter einer "Gewichtung" von Größen soll insbesondere verstanden werden, dass jede der Größen mit einem zugeordneten Gewichtungsfaktor, vorzugsweise einer reellen Zahl, multipliziert wird. Unter einer Summe über diese Produkte, dividiert durch die Summe über die Gewichtungsfaktoren wird insbesondere der "Wert der Gewichtung" verstanden. Insbesondere werden die Gewichtungsfaktoren durch einen Algorithmus bestimmt, der Teil des Programms ist, das von dem Prozessor ausgeführt wird. Unter einer "Mittelwertbildung" von Größen soll insbesondere eine Gewichtung der Größen verstanden werden, bei der alle den Größen jeweils zugeordnete Gewichtungsfaktoren den gleichen Wert aufweisen. Unter einem "Mittelwert" soll insbesondere der Wert einer Gewichtung verstanden werden, bei der alle Gewichtungsfaktoren gleich groß sind. Insbesondere kann durch eine Gewichtung der Sensorkenngrößen der Temperatursensoren eine besonders vorteilhafte Temperaturbestimmung des Objekts durchgeführt werden.

In einer weiteren Ausgestaltung der Erfindung wird vorgeschlagen, dass die, durch die Auswerteeinheit ausgeführte, Gewichtung zumindest einen Gewichtungsfaktor mit dem Wert Null aufweist. Insbesondere kann so erreicht werden, dass nur ein Sensor mit einer guten thermischen Kopplung einen Beitrag zur Temperaturkenngröße leistet. Insbesondere kann ein, insbesondere von der Auswerteeinheit als defekt erkannter, Temperatursensor von der Gewichtung ausgeschlossen werden.

Vorzugsweise ist die, durch die Auswerteeinheit ausgeführte, Gewichtung zumindest abhängig von zumindest einer Sensorkenngröße einer aktuellen Messung. Unter einer "aktuellen Messung" soll insbesondere eine Messung eines kompletten Satzes von Sensorkenngrößen verstanden werden, die jünger ist als alle weiteren Messungen kompletter Sätze von Sensorkenngrößen. Unter einem "kompletten Satz" von Sensorkenngrößen soll insbesondere ein Satz von Sensorkenngrößen der zumindest zwei Temperatursensoren verstanden werden, denen bei der Gewichtung jeweils ein Gewichtungsfaktor zugeordnet wird. Ein kompletter Satz von Sensorkenngrößen ist insbesondere in der Speichereinheit abgespeichert. Insbesondere wird eine Messung eines kompletten Satzes innerhalb von 10 s, vorteilhaft innerhalb von 5 s und vorzugsweise innerhalb von 1 s durchgeführt. Vorzugsweise wird eine Messung eines neuen kompletten Satzes gestartet sobald eine laufende abgeschlossen ist. Es kann insbesondere eine von geometrischen Parametern der Sensoranordnung unabhängige Gewichtung der Sensorkenngrößen durchgeführt werden.

Weiterhin wird vorgeschlagen, dass die, durch die Auswerteeinheit ausgeführte, Gewichtung zumindest abhängig ist von zumindest einer Sensorkenngröße wenigstens einer vorangegangenen Messung. Unter einer "vorangegangenen Messung" soll insbesondere eine Messung eines kompletten Satzes von Sensorkenngrößen verstanden werden, die sich von einer aktuellen Messung unterscheidet. Vorzugsweise ist eine vorangegangene Messung in der Speichereinheit der Auswerteeinheit abgespeichert. Insbesondere ist die Gewichtung zumindest von einer Differenz zwischen den Sensorkenngrößen unterschiedlicher Messungen abhängig. Es kann insbesondere eine verlässliche Bestimmung der Temperaturkenngröße durchgeführt werden. Insbesondere kann aus einer hohen Differenz zwischen den Sensorkenngrößen eines Temperatursensors unterschiedlicher Messungen auf eine gute thermische Kopplung geschlossen werden.

Weiterhin wird vorgeschlagen, dass die, durch die Auswerteeinheit ausgeführte, Gewichtung zumindest abhängig ist von zumindest einer Sensorkenngröße jeder vorangegangenen Messung seit einem Beginn eines aktuellen Erhitzungs- und/oder Abkühlvorgangs. Unter einem "Beginn eines aktuellen Erhitzungs- und/oder Abkühlungsvorgang" soll insbesondere der jüngste Zeitpunkt verstanden werden, zu dem eine Aktivierung einer Heiz- und/oder Kühleinheit, die der Sensoranordnung zugeordnet ist, durch einen Bediener angefordert wurde. Dadurch kann insbesondere eine verlässliche Temperaturbestimmung durchgeführt werden.

Vorzugsweise ist die, durch die Auswerteeinheit ausgeführte, Gewichtung umso stärker von einer Sensorkenngröße einer vorangegangen Messung abhängig, je kürzer die vorangegangene Messung zurückliegt. Je älter eine Sensorkenngröße ist, desto weniger Einfluss hat sie auf die Gewichtung. Dadurch kann insbesondere eine verbesserte Temperaturbestimmung und insbesondere eine Robustheit gegen eine Positionsänderung des Objekts ermöglicht werden.

Ferner wird vorgeschlagen, dass die, durch die Auswerteeinheit ausgeführte, Gewichtung abhängig ist von zumindest zwei verschiedenen Eigenschaften von zumindest einem der Temperatursensoren. Unter einer "Eigenschaft" des Temperatursensors soll insbesondere

- eine aktuelle Temperatur,
- eine maximale und/oder minimale Temperatur seit einem bestimmten Zeitpunkt,
- eine Differenz der Temperaturwerte der aktuellen Messung und einer vorangegangenen, vorzugsweise der vorherigen, also zweitjüngsten, Messung,
- eine maximale und/oder minimale Differenz der Temperaturwerte zweier aufeinanderfolgender Messungen seit einem bestimmten Zeitpunkt,
- eine Varianz der Temperatur über eine Zeitdauer seit einem bestimmten Zeitpunkt,
- eine seit einem bestimmten Zeitpunkt gemittelte Temperatur,
- und/oder Abwandlungen der genannten Eigenschaften, die einem Fachmann als geeignet erscheinen,

verstanden werden. Insbesondere wird ein Temperatursensor bei einer Gewichtung bevorzugt, also insbesondere mit einem vergleichsweise hohen Gewichtungsfaktor versehen, dessen Wert der Eigenschaft unter den Temperatursensoren maximal bzw. minimal ist. Unter einem bestimmten Zeitpunkt soll insbesondere ein Zeitpunkt verstanden werden seit dem eine bestimmte Anzahl an Messungen durchgeführt wurde und der insbesondere zwischen 10 Sekunden und 5 min zurückliegt. Insbesondere handelt es sich bei dem bestimmten Zeitpunkt um den Beginn eines aktuellen Erhitzungs- und/oder Abkühlungsvorgang. Unter einer "Differenz" zweier Werte soll insbesondere ein positiver Betrag einer Subtraktion verstanden werden, bei der einer der Werte vom anderen abgezogen wird. Es kann insbesondere eine besonders vorteilhafte Temperaturbestimmung durchgeführt werden.

In einer weiteren Ausführung der Erfindung wird vorgeschlagen, dass die Gewichtung zumindest abhängig ist von zumindest einer Zielfunktion, die zumindest einem Temperatursensor einen Zielfunktionswert zuordnet. Unter einer "Zielfunktion" soll insbesondere eine mathematische Funktion verstanden werden, die vorzugsweise von zumindest einer Sensorkenngröße einer aktuellen Messung und zumindest einer Sensorkenngröße einer vergangenen Messung abhängig ist. Insbesondere wird eine Sensorkenngröße eines Temperatursensors mit Null gewichtet, dessen Zielfunktionswert von einem maximalen bzw. minimalen Zielfunktionswert aller Temperatursensoren abweicht. Es kann insbesondere eine besonders vorteilhafte Temperaturbestimmung durchgeführt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine schematische Darstellung einer erfindungsgemäßen Hausgerätevorrichtung und
Fig. 2 ein Kochfeld mit einer erfindungsgemäßen Hausgerätevorrichtung.

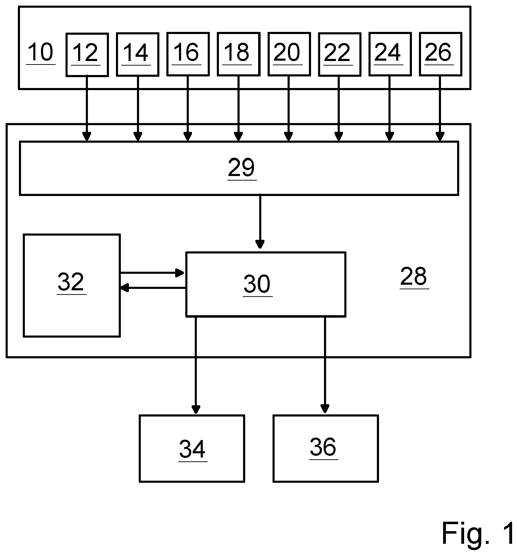

Die Figur 1 zeigt eine Hausgerätevorrichtung mit einer Sensoranordnung 10 mit acht als NTC-Widerstände ausgebildeten Temperatursensoren 12, 14, 16, 18, 20, 22, 24, 26, die jeweils zu einer Bestimmung einer Sensorkenngröße $T_1$, $T_2$, $T_3$, $T_4$, $T_5$, $T_6$, $T_7$, $T_8$, einer Temperatur des Temperatursensors 12, 14, 16, 18, 20, 22, 24, 26, vorgesehen sind. Es wird mit Werten der Temperaturen auf der Celius-Skala gerechnet. Die Hausgerätevorrichtung weist eine Auswerteeinheit 28 auf. Die Auswerteeinheit 28 weist einen Prozessor 30 und eine Speichereinheit 32 auf. In der Speichereinheit 32 ist ein Betriebsprogramm hinterlegt, das von dem Prozessor 30 ausgeführt wird. Die Auswerteeinheit 28 weist eine Messeinheit 29 auf, die die Sensorkenngrößen $T_1$, $T_2$, $T_3$, $T_4$, $T_5$, $T_6$, $T_7$, $T_8$ der Temperatursensoren 12, 14, 16, 18, 20, 22, 24, 26 bestimmt. Die von der Messeinheit 29 bestimmten Temperaturen werden an den Prozessor 30 gegeben, der diese in der Speichereinheit 32 ablegt. Die Messeinheit 29 führt Messungen in einem Abstand von 1 s aus. Die Auswerteeinheit 28 ist zu einer Bestimmung einer Temperaturkenngröße $T_G$ durch eine Gewichtung der Sensorkenngrößen $T_1$, $T_2$, $T_3$, $T_4$, $T_5$, $T_6$, $T_7$, $T_8$ der Temperatursensoren 12, 14, 16, 18, 20, 22, 24, 26, die sich von einer reinen Mittelwertbildung unterscheidet, vorgesehen. Eine Gewichtung der Sensorkenngrößen $T_1$, $T_2$, $T_3$, $T_4$, $T_5$, $T_6$, $T_7$, $T_8$ erfolgt mit Gewichtungsfaktoren $c_1$, $c_2$, $c_3$, $c_4$, $c_5$, $c_6$, $c_7$, $c_8$. Die Temperaturkenngröße $T_G$ errechnet sich durch $T_G = (T_1 \times c_1 + T_2 \times c_2 + T_3 \times c_3 + T_4 \times c_4 + T_5 \times c_5 + T_6 \times c_6 + T_7 \times c_7 + T_8 \times c_8) \div (c_1 + c_2 + c_3 + c_4 + c_5 + c_6 + c_7 + c_8)$. Die Gewichtungsfaktoren $c_1$, $c_2$, $c_3$, $c_4$, $c_5$, $c_6$, $c_7$, $c_8$ werden durch einen Algorithmus, der Teil des Betriebsprogramms ist, bestimmt.

In einer bevorzugten, ersten Ausgestaltung der Erfindung ist die Gewichtung abhängig von einer Zielfunktion h, die den Temperatursensoren 12, 14, 16, 18, 20, 22, 24, 26 jeweils einen Zielfunktionswert zuordnet. Die Zielfunktion h, und somit die Gewichtung, ist abhängig von einer Sensorkenngröße $T_1(k)$, $T_2(k)$, $T_3(k)$, $T_4(k)$, $T_5(k)$, $T_6(k)$, $T_7(k)$, $T_8(k)$ einer aktuellen Messung. Hierbei entsprechen die $T_i(k)$ den $T_i$ in der oben genannten Gleichung für die Temperaturkenngröße $T_G$. Die aktuelle Messung stellt hierbei die k-te Messung seit einem Beginn eines aktuellen Erhitzungsvorgangs dar. k ist eine Natürliche Zahl oder 0 und nummeriert die durchgeführten Messungen durch. k = 0 bezeichnet die älteste Messung und je größer k ist, desto jünger ist die Messung. Zu Beginn des Erhitzungsvorgangs wurde eine 0-te Messung durchgeführt. Der Algorithmus beginnt mit der 1-ten Messung, die danach durchgeführt wurde. Die Zielfunktion h, und somit die Gewichtung, ist abhängig von einer Sensorkenngröße $T_1(k-n)$, $T_2(k-n)$, $T_3(k-n)$, $T_4(k-n)$, $T_5(k-n)$, $T_6(k-n)$, $T_7(k-n)$, $T_8(k-n)$ einer vorangegangenen (k-n)-ten Messung. n ist eine Natürliche Zahl größer 0 und maximal so groß wie k. Die Zielfunktion h, und somit die Gewichtung, ist abhängig von einer Sensorkenngröße $T_1(k-n)$, $T_2(k-n)$, $T_3(k-n)$, $T_4(k-n)$, $T_5(k-n)$, $T_6(k-n)$, $T_7(k-n)$, $T_8(k-n)$ jeder vorangegangenen Messung seit einem Beginn eines aktuellen Erhitzungsvorgangs. n nimmt also im Laufe des Algorithmus jede natürliche Zahl von 1 bis k an. Die Zielfunktion h, und somit die Gewichtung, ist umso stärker von einer Sensorkenngröße $T_1(k-n)$, $T_2(k-n)$, $T_3(k-n)$, $T_4(k-n)$, $T_5(k-n)$, $T_6(k-n)$, $T_7(k-n)$, $T_8(k-n)$ einer vorangegangen Messung abhängig, je kürzer die vorangegangene Messung zurückliegt, also je jünger diese ist.

Die Zielfunktion h wird mit Hilfe einer Hilfsfunktion g gebildet. Die Funktionswerte von h und g für den Temperatursensor 12, 14, 16, 18, 20, 22, 24, 26 mit der Sensorkenngröße $T_i$ zur aktuellen Messung k sind mit $g_i(k)$ und $h_i(k)$

bezeichnet.

$$g_i(k) = v \times g_i(k-1) + |T_i(k) - T_i(k-1)|$$

$$h_i(k) = g_i(k) \times T_i(k)^p$$

Ein Parameter v dient dazu, festzulegen, wie schnell die Sensorkenngrößen $T_1(k-n)$, $T_2(k-n)$, $T_3(k-n)$, $T_4(k-n)$, $T_5(k-n)$, $T_6(k-n)$, $T_7(k-n)$, $T_8(k-n)$ vorangegangener Messungen vergessen werden, also wie viel weniger vorangegangene Messungen bei der Gewichtung beachtet werden. Der Parameter v ist mit 0,99 gewählt. Es sind aber auch beliebige andere Werte mindestens so groß wie 0 und kleiner als 1 für v denkbar. Eine Potenz p bestimmt, wie wichtig die aktuelle Sensorkenngröße $T_1(k)$, $T_2(k)$, $T_3(k)$, $T_4(k)$, $T_5(k)$, $T_6(k)$, $T_7(k)$, $T_8(k)$ ist. Je größer die Potenz p ist, desto wichtiger ist die aktuelle Sensorkenngröße $T_1(k)$, $T_2(k)$, $T_3(k)$, $T_4(k)$, $T_5(k)$, $T_6(k)$, $T_7(k)$, $T_8(k)$ im Vergleich zu einem Wert der Hilfsfunktion g. Die Potenz p ist mit 2 gewählt. Es sind aber auch beliebige andere Werte größer als 0 für p denkbar.

Ein Gewichtungsfaktor $c_i$ zur Sensorkenngröße $T_i(k)$, für deren Temperatursensor 12, 14, 16, 18, 20, 22, 24, 26 der Zielfunktionswert $h_i(k)$ unter den Zielfunktionswerten $h_1(k)$, $h_2(k)$, $h_3(k)$, $h_4(k)$, $h_5(k)$, $h_6(k)$, $h_7(k)$, $h_8(k)$ maximal ist, wird 1 gesetzt. Ein Gewichtungsfaktor $c_i$ zur Sensorkenngröße $T_i(k)$, für deren Temperatursensor 12, 14, 16, 18, 20, 22, 24, 26 der Zielfunktionswert $h_i(k)$ von einem maximalen Wert unter den Zielfunktionswerten $h_1(k)$, $h_2(k)$, $h_3(k)$, $h_4(k)$, $h_5(k)$, $h_6(k)$, $h_7(k)$, $h_8(k)$ abweicht, wird 0 gesetzt.

Um einen Sensorschaden zu erkennen, wird in einem Betriebszustand, in dem sich die Temperaturen der Temperatursensoren 12, 14, 16, 18, 20, 22, 24, 26 innerhalb von zehn Messungen um Beträge ändern, die in einem Bereich von 0-5% der aktuellen Temperaturen liegen, eine Plausibilitätsprüfung durchgeführt. Weist ein Temperatursensor 12, 14, 16, 18, 20, 22, 24, 26 eine Temperatur auf, die mindestens 30% über dem Median der Temperaturen der Temperatursensoren 12, 14, 16, 18, 20, 22, 24, 26 liegt, ist von einem Defekt auszugehen. Ein solcher Temperatursensor 12, 14, 16, 18, 20, 22, 24, 26 wird von einer Beachtung bei einer Maximum-Bestimmung über die Zielfunktionswerte $h_1(k)$, $h_2(k)$, $h_3(k)$, $h_4(k)$, $h_5(k)$, $h_6(k)$, $h_7(k)$, $h_8(k)$ ausgeschlossen und dessen Gewichtungsfaktor $c_1$, $c_2$, $c_3$, $c_4$, $c_5$, $c_6$, $c_7$, $c_8$ wird dauerhaft auf 0 gesetzt.

In einer alternativen, zweiten Ausgestaltung der Erfindung, einer Abwandlung der ersten Ausgestaltung, findet eine Zielfunktion f Anwendung die nur von der aktuellen Messung und einer vorangegangen Messung abhängig ist. Die vorangegangene Messung ist die zweitjüngste Messung, wird also mit k-1 bezeichnet.

$$f_i(k) = a \times T_i(k) \div \max_i (T_1(k),\ldots,T_8(k)) + 1/a \times |T_i(k) - T_i(k-1)| \div \max_i (|T_1(k) - T_1(k-1)|,\ldots,|T_8(k) - T_8(k-1)|)$$

Der Ausdruck $\max_i$ ermittelt jeweils das Maximum der in Klammern stehenden Werte. Ein Parameter a bestimmt, als wie wichtig die Temperatur einer aktuellen Messung, bzw. die Differenz zwischen der Temperatur der aktuellen Messung und der Temperatur der vorangegangenen Messung als Argument für eine gute thermische Kopplung anzusehen sind. Der Parameter a ist auf einen Wert von 2 gesetzt. Grundsätzlich sind beliebige Werte und bevorzugt Werte in einem Bereich von ¼ bis 4 für den Parameter a denkbar. Die übrige Vorgehensweise entspricht der des ersten Ausführungsbeispiels.

In einer weiteren, dritten Ausgestaltung, einer Abwandlung der ersten Ausgestaltung, findet eine Zielfunktion g Anwendung, die nur von der aktuellen Messung und einer vorangegangen Messung abhängig ist. Die vorangegangene Messung ist die zweitjüngste Messung, wird also mit k-1 bezeichnet.

$$f_i(k) = b \times T_i(k) \div T_{maxD} + 1/b \times |T_i(k) - T_i(k-1)| \div \max_i (|T_1(k) - T_1(k-1)|,\ldots,|T_8(k) - T_8(k-1)|)$$

Unter dem Ausdruck $T_{maxD}$ ist die Temperatur des Temperatursensors 12, 14, 16, 18, 20, 22, 24, 26 mit der größten Temperaturdifferenz zwischen der aktuellen und der vorangegangenen Messung zu verstehen. Ein Parameter b bestimmt, als wie wichtig die Temperatur einer aktuellen Messung, bzw. die Differenz zwischen der Temperatur der aktuellen Messung und der Temperatur der vorangegangenen Messung als Argument für eine gute thermische Kopplung anzusehen sind. Der Parameter b ist auf einen Wert von 2 gesetzt. Grundsätzlich sind beliebige Werte und bevorzugt Werte in einem Bereich von ¼ bis 4 für den Parameter b denkbar. Die übrige Vorgehensweise entspricht der des ersten Ausführungsbeispiels.

Es sind Abwandlungen der zweiten und dritten Ausgestaltung denkbar, in denen die vorangegangene Messung eine Messung ist, die älter ist als die zweitjüngste Messung.

In einer vierten Ausgestaltung der Erfindung ist die Gewichtung abhängig von den Sensorkenngrößen $T_1$, $T_2$, $T_3$, $T_4$, $T_5$, $T_6$, $T_7$, $T_8$ einer aktuellen Messung. Die Sensorkenngrößen $T_1$, $T_2$, $T_3$, $T_4$, $T_5$, $T_6$, $T_7$, $T_8$ werden in aufsteigender Reihenfolge sortiert und ergeben eine Liste von Werten $T_1'$, $T_2'$, $T_3'$, $T_4'$, $T_5'$, $T_6'$, $T_7'$, $T_8'$. Die mittleren Werte der Werte der Liste, also die Werte die größer sind als 25 % der unteren Werte der Liste und die kleiner sind als 25 % der oberen Werte der Liste, erhalten einen Gewichtungsfaktor $c_1$, $c_2$, $c_3$, $c_4$, $c_5$, $c_6$, $c_7$, $c_8$ von 1 und die übrigen einen Gewichtungs-faktor $c_1$, $c_2$, $c_3$, $c_4$, $c_5$, $c_6$, $c_7$, $c_8$ von 0. Die Gewichtung weist also vier Gewichtungsfaktoren $c_1$, $c_2$, $c_3$, $c_4$, $c_5$, $c_6$, $c_7$, $c_8$ mit dem Wert Null auf. So sind die Werte $T_1'$, $T_2'$, $T_7'$ und $T_8'$ mit 0 gewichtet und die Werte $T_3'$, $T_4'$, $T_5'$, $T_6'$ mit 1 gewichtet. Es sind auch Ausführungen denkbar, in denen die Grenzen anders gelegt sind. Beispielsweise könnte es sich bei den mittleren Werten um die Werte handeln, die größer sind, als 40% der unteren Werte der Liste und kleiner sind als 15% der oberen Werte der Liste oder um eine beliebige Abwandlung dessen. Weiterhin sind Ausführungen denkbar, in denen den oberen und/oder den unteren Werten Gewichtungsfaktoren $c_1$, $c_2$, $c_3$, $c_4$, $c_5$, $c_6$, $c_7$, $c_8$ zwischen 0 und 1 zugeordnet sind. Durch eine geeignete Wahl der Grenzen kann vermieden werden, dass ein defekter Temperatursensor 12, 14, 16, 18, 20, 22, 24, 26 oder ein Temperatursensor 12, 14, 16, 18, 20, 22, 24, 26, der eine schlechte thermische Kopplung aufweist, einen Beitrag zur Temperaturkenngröße $T_G$ leistet.

In einer fünften Ausgestaltung der Erfindung wird eine Gewichtung anhand von sechs Eigenschaften der Temperatursensoren 12, 14, 16, 18, 20, 22, 24, 26 durchgeführt. Bei den Eigenschaften handelt es sich um

1. eine aktuelle Temperatur,
2. eine maximale Temperatur seit einem Beginn eines aktuellen Erhitzungsvorgangs,
3. eine Differenz der Temperaturen einer aktuellen Messung und einer vorangegangen Messung, die 30 Messungen zurückliegt,
4. eine maximale Differenz der Temperatur zweier aufeinanderfolgender Messungen während der letzten Minute,
5. eine Varianz der Temperatur über die letzten 5 Minuten,
6. eine über die letzte Minute gemittelte Temperatur.

Ein Algorithmus vergleicht die Eigenschaften der Temperatursensoren 12, 14, 16, 18, 20, 22, 24, 26 und vergibt für erfüllte Kriterien Stimmen. So erhält der Temperatursensor 12, 14, 16, 18, 20, 22, 24, 26,

- dessen Eigenschaft 1 maximal ist, 5 Stimmen,
- dessen Eigenschaft 2 maximal ist, 2 Stimmen,
- dessen Eigenschaft 3 maximal ist, 6 Stimmen,
- dessen Eigenschaft 4 maximal ist, 1 Stimmen,
- dessen Eigenschaft 5 minimal ist, 2 Stimmen,
- dessen Eigenschaft 6 maximal ist, 3 Stimmen.

Eine Sensorkenngröße $T_1$, $T_2$, $T_3$, $T_4$, $T_5$, $T_6$, $T_7$, $T_8$ eines Temperatursensors 12, 14, 16, 18, 20, 22, 24, 26, dessen Stimmzahl unter den Temperatursensoren 12, 14, 16, 18, 20, 22, 24, 26 maximal ist, wird mit einem Gewichtungsfaktor $c_1$, $c_2$, $c_3$, $c_4$, $c_5$, $c_6$, $c_7$, $c_8$ von 1 gewichtet. Eine Sensorkenngröße $T_1$, $T_2$, $T_3$, $T_4$, $T_5$, $T_6$, $T_7$, $T_8$ eines Temperatursensors 12, 14, 16, 18, 20, 22, 24, 26, dessen Stimmzahl keiner ist als eine unter den Temperatursensoren 12, 14, 16, 18, 20, 22, 24, 26 maximale Stimmzahl, wird mit einem Gewichtungsfaktor $c_1$, $c_2$, $c_3$, $c_4$, $c_5$, $c_6$, $c_7$, $c_8$ von 0 gewichtet.

In Abwandlungen der fünften Ausgestaltung werden andere Stimmzahlen für die Kriterien angesetzt und/oder Temperatursensoren 12, 14, 16, 18, 20, 22, 24, 26, die eine zweitbeste oder drittbeste Übereinstimmung mit dem Kriterium liefern, erhalten ebenfalls Stimmen, deren Anzahl jedoch geringer ausfällt als für die beste Erfüllung des Kriteriums und/oder die Stimmzahl der Temperatursensoren 12, 14, 16, 18, 20, 22, 24, 26 wird als Gewichtungsfaktor $c_1$, $c_2$, $c_3$, $c_4$, $c_5$, $c_6$, $c_7$, $c_8$ für die Sensorkenngrößen $T_1$, $T_2$, $T_3$, $T_4$, $T_5$, $T_6$, $T_7$, $T_8$ verwendet.

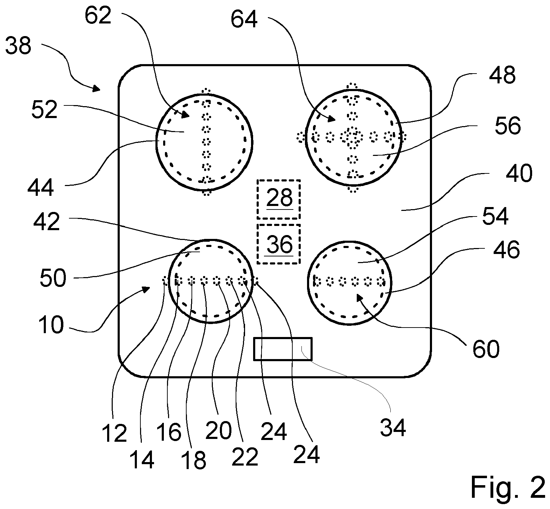

In der Figur 2 ist ein Kochfeld 38 in einer Ansicht von oben dargestellt. Es weist vier Kochzonen 42, 44, 46, 48 auf. Unter einer Kochfeldplatte 40 ist in einem Umfeld der Kochzonen 42, 44, 46, 48 jeweils eine Sensoranordnung 10, 60, 62, 64 angeordnet. Die Sensoranordnung 10 weist acht als NTC-Widerstände ausgebildete Temperatursensoren 12, 14, 16, 18, 20, 22, 24, 26 auf. Eine Auswerteeinheit 28 ist zu einer Bestimmung einer Temperaturkenngröße $T_G$ durch eine Gewichtung der Sensorkenngrößen $T_1$, $T_2$, $T_3$, $T_4$, $T_5$, $T_6$, $T_7$, $T_8$ der acht Temperatursensoren 12, 14, 16, 18, 20, 22, 24, 26, die sich von einer reinen Mittelwertbildung unterscheidet, vorgesehen. Die bestimmte Temperaturkenngröße wird an eine Anzeigeeinheit 34 und eine Steuereinheit 36, die eine Leistung der Heizelemente 50, 52, 54, 56 steuert, weitergeleitet.

Bezugzeichen

| 10 | Sensoranordnung | 62 | Sensoranordnung |

(fortgesetzt)

| 12 | Temperatursensor | 64 | Sensoranordnung |
|----|------------------|----|-----------------|
| 14 | Temperatursensor | | |
| 16 | Temperatursensor | | |
| 18 | Temperatursensor | | |
| 20 | Temperatursensor | | |
| 22 | Temperatursensor | | |
| 24 | Temperatursensor | | |
| 26 | Temperatursensor | | |
| 28 | Auswerteeinheit | | |
| 29 | Messeinheit | | |
| 30 | Prozessor | | |
| 32 | Speichereinheit | | |
| 34 | Anzeigeeinheit | | |
| 36 | Steuerungseinheit | | |
| 38 | Kochfeld | | |
| 40 | Kochfeldplatte | | |
| 42 | Kochzone | | |
| 44 | Kochzone | | |
| 46 | Kochzone | | |
| 48 | Kochzone | | |
| 50 | Heizelement | | |
| 52 | Heizelement | | |
| 54 | Heizelement | | |
| 56 | Heizelement | | |
| 60 | Sensoranordnung | | |

## Patentansprüche

1. Hausgerätevorrichtung, insbesondere Kochfeldvorrichtung, mit einer Sensoranordnung (10) mit zumindest zwei Temperatursensoren (12, 14, 16, 18, 20, 22, 24, 26), die jeweils zu einer Bestimmung einer Sensorkenngröße ($T_1$, $T_2$, $T_3$, $T_4$, $T_5$, $T_6$, $T_7$, $T_8$) vorgesehen sind, und mit zumindest einer Auswerteeinheit (28), die zu einer Bestimmung einer Temperaturkenngröße ($T_G$) durch eine Gewichtung von zumindest zwei der Sensorkenngrößen ($T_1$, $T_2$, $T_3$, $T_4$, $T_5$, $T_6$, $T_7$, $T_8$) der zumindest zwei Temperatursensoren (12, 14, 16, 18, 20, 22, 24, 26), die sich von einer reinen Mittelwertbildung unterscheidet, vorgesehen ist, **dadurch gekennzeichnet, dass** die Gewichtung zumindest einen Gewichtungsfaktor ($c_1$, $c_2$, $c_3$, $c_4$, $c_5$, $c_6$, $c_7$, $c_8$) mit dem Wert Null aufweist und dass die Gewichtung zumindest abhängig ist von zumindest einer Sensorkenngröße ($T_1$, $T_2$, $T_3$, $T_4$, $T_5$, $T_6$, $T_7$, $T_8$) wenigstens einer vorangegangenen Messung.

2. Hausgerätevorrichtung nach Anspruch 1, **dadurch gekennzeichnet, dass** die Gewichtung zumindest abhängig ist von zumindest einer Sensorkenngröße ($T_1$, $T_2$, $T_3$, $T_4$, $T_5$, $T_6$, $T_7$, $T_8$) einer aktuellen Messung.

3. Hausgerätevorrichtung nach einem der vorhergehenden Ansprüche, **dadurch gekennzeichnet, dass** die Gewichtung zumindest abhängig ist von zumindest einer Sensorkenngröße ($T_1$, $T_2$, $T_3$, $T_4$, $T_5$, $T_6$, $T_7$, $T_8$) jeder vorangegangenen Messung, seit einem Beginn eines aktuellen Erhitzungs- und/oder Abkühlvorgangs.

4. Hausgerätevorrichtung nach einem der vorhergehenden Ansprüche, **dadurch gekennzeichnet, dass** die Gewichtung umso stärker von einer Sensorkenngröße ($T_1$, $T_2$, $T_3$, $T_4$, $T_5$, $T_6$, $T_7$, $T_8$) einer vorangegangenen Messung abhängig ist, je kürzer die vorangegangene Messung zurückliegt.

5. Hausgerätevorrichtung nach einem der vorhergehenden Ansprüche, **dadurch gekennzeichnet, dass** die Gewichtung abhängig ist von zumindest zwei verschiedenen Eigenschaften von zumindest einem der Temperatursensoren (12, 14, 16, 18, 20, 22, 24, 26).

6. Hausgerätevorrichtung nach einem der vorhergehenden Ansprüche, **dadurch gekennzeichnet, dass** die Gewichtung zumindest abhängig ist von zumindest einer Zielfunktion (f; g; h), die zumindest einem Temperatursensor (12, 14, 16, 18, 20, 22, 24, 26) einen Zielfunktionswert zuordnet.

7. Hausgerät mit einer Hausgerätevorrichtung nach einem der vorhergehenden Ansprüche.

8. Verfahren zum Betreiben einer Hausgerätevorrichtung nach einem der Ansprüche 1 bis 6, mit einer Sensoranordnung (10) mit zumindest zwei Temperatursensoren (12, 14, 16, 18, 20, 22, 24, 26), die jeweils zu einer Bestimmung einer Sensorkenngröße ($T_1$, $T_2$, $T_3$, $T_4$, $T_5$, $T_6$, $T_7$, $T_8$) vorgesehen sind, und mit zumindest einer Auswerteeinheit (28), wobei durch die zumindest eine Auswerteeinheit (28) eine Temperaturkenngröße ($T_G$) durch eine Gewichtung von zumindest zwei der Sensorkenngrößen ($T_1$, $T_2$, $T_3$, $T_4$, $T_5$, $T_6$, $T_7$, $T_8$) der zumindest zwei Temperatursensoren (12, 14, 16, 18, 20, 22, 24, 26), die sich von einer reinen Mittelwertbildung unterscheidet, bestimmt wird, wobei die Gewichtung zumindest einen Gewichtungsfaktor ($c_1$, $c_2$, $c_3$, $c_4$, $c_5$, $c_6$, $c_7$, $c_8$) mit dem Wert Null aufweist und wobei die Gewichtung zumindest abhängig ist von zumindest einer Sensorkenngröße ($T_1$, $T_2$, $T_3$, $T_4$, $T_5$, $T_6$, $T_7$, $T_8$) wenigstens einer vorangegangenen Messung.


**Claims**

1. Domestic appliance apparatus, in particular hob apparatus, with a sensor arrangement (10) with at least two temperature sensors (12, 14, 16, 18, 20, 22, 24, 26), which in each case are provided for determining a sensor variable ($T_1$, $T_2$, $T_3$, $T_4$, $T_5$, $T_6$, $T_7$, $T_8$), and with at least one evaluation unit (28), which is provided for determining a temperature variable (To) by a weighting of at least two of the sensor variables ($T_1$, $T_2$, $T_3$, $T_4$, $T_5$, $T_6$, $T_7$, $T_8$) of the at least two temperature sensors (12, 14, 16, 18, 20, 22, 24, 26), which differs from a pure averaging, **characterised in that** the weighting has at least one weighting factor ($c_1$, $c_2$, $c_3$, $c_4$, $c_5$, $c_6$, $c_7$, $c_8$) with the value zero and that the weighting is at least dependent upon at least one sensor variable ($T_1$, $T_2$, $T_3$, $T_4$, $T_5$, $T_6$, $T_7$, $T_8$) of at least one preceding measurement.

2. Domestic appliance apparatus according to claim 1, **characterised in that** the weighting is at least dependent upon at least one sensor variable ($T_1$, $T_2$, $T_3$, $T_4$, $T_5$, $T_6$, $T_7$, $T_8$) of a current measurement.

3. Domestic appliance apparatus according to one of the preceding claims, **characterised in that** the weighting is at least dependent upon at least one sensor variable ($T_1$, $T_2$, $T_3$, $T_4$, $T_5$, $T_6$, $T_7$, $T_8$) of each preceding measurement since a beginning of a current heating and/or cooling procedure.

4. Domestic appliance apparatus according to one of the preceding claims, **characterised in that** the weighting is more greatly dependent upon a sensor variable ($T_1$, $T_2$, $T_3$, $T_4$, $T_5$, $T_6$, $T_7$, $T_8$) of a preceding measurement, the shorter the length of time since the preceding measurement.

5. Domestic appliance apparatus according to one of the preceding claims, **characterised in that** the weighting is dependent upon at least two different properties of at least one of the temperature sensors (12, 14, 16, 18, 20, 22, 24, 26).

6. Domestic appliance apparatus according to one of the preceding claims, **characterised in that** the weighting is at least dependent upon at least one target function (f; g; h), which assigns a target function value to at least one temperature sensor (12, 14, 16, 18, 20, 22, 24, 26).

7. Domestic appliance with a domestic appliance apparatus according to one of the preceding claims.

8. Method for operating a domestic appliance apparatus according to one of claims 1 to 6, with a sensor arrangement (10) with at least two temperature sensors (12, 14, 16, 18, 20, 22, 24, 26), which are in each provided for determining a sensor variable ($T_1$, $T_2$, $T_3$, $T_4$, $T_5$, $T_6$, $T_7$, $T_8$), and with at least one evaluation unit (28), wherein a temperature variable ($T_G$) is determined by the at least one evaluation unit (28) by a weighting of at least two of the sensor variables ($T_1$, $T_2$, $T_3$, $T_4$, $T_5$, $T_6$, $T_7$, $T_8$) of the at least two temperature sensors (12, 14, 16, 18, 20, 22, 24, 26), which differs from a pure averaging, wherein the weighting has at least one weighting factor ($c_1$, $c_2$, $c_3$, $c_4$, $c_5$, $c_6$, $c_7$, $c_8$) with the value zero and wherein the weighting is at least dependent upon at least one sensor variable ($T_1$, $T_2$, $T_3$, $T_4$, $T_5$, $T_6$, $T_7$, $T_8$) of at least one preceding measurement.

**Revendications**

1. Dispositif d'appareil ménager, en particulier dispositif de champ de cuisson, avec un agencement de capteurs (10) avec au moins deux capteurs de température (12, 14, 16, 18, 20, 22, 24, 26), respectivement prévus pour une détermination d'une caractéristique de capteur ($T_1$, $T_2$, $T_3$, $T_4$, $T_5$, $T_6$, $T_7$, $T_8$), et avec au moins une unité d'évaluation (28) prévue pour une détermination d'une caractéristique de température ($T_G$) via une pondération d'au moins deux caractéristiques de capteur ($T_1$, $T_2$, $T_3$, $T_4$, $T_5$, $T_6$, $T_7$, $T_8$) des au moins deux capteurs de température (12, 14, 16, 18, 20, 22, 24, 26), qui se différencie d'un simple calcul de moyenne, **caractérisé en ce que** la pondération présente au moins un facteur de pondération ($C_1$, $C_2$, $C_3$, $C_4$, $C_5$, $C_6$, $C_7$, $C_8$) de valeur nulle et **en ce que** la pondération est au moins dépendante d'au moins une caractéristique de capteur ($T_1$, $T_2$, $T_3$, $T_4$, $T_5$, $T_6$, $T_7$, $T_8$) d'au moins une mesure antérieure.

2. Dispositif d'appareil ménager selon la revendication 1, **caractérisé en ce que** la pondération est au moins dépendante d'au moins une caractéristique de capteur ($T_1$, $T_2$, $T_3$, $T_4$, $T_5$, $T_6$, $T_7$, $T_8$) d'une mesure actuelle.

3. Dispositif d'appareil ménager selon l'une des revendications précédentes, **caractérisé en ce que** la pondération est au moins dépendante d'au moins une caractéristique de capteur ($T_1$, $T_2$, $T_3$, $T_4$, $T_5$, $T_6$, $T_7$, $T_8$) de chaque mesure antérieure, depuis un début d'un processus de chauffe et/ou de refroidissement actuel.

4. Dispositif d'appareil ménager selon l'une des revendications précédentes, **caractérisé en ce que** la pondération est d'autant plus dépendante d'une caractéristique de capteur ($T_1$, $T_2$, $T_3$, $T_4$, $T_5$, $T_6$, $T_7$, $T_8$) d'une mesure antérieure que la mesure antérieure est récente.

5. Dispositif d'appareil ménager selon l'une des revendications précédentes, **caractérisé en ce que** la pondération est dépendante d'au moins deux propriétés différentes d'au moins un des capteurs de température (12, 14, 16, 18, 20, 22, 24, 26).

6. Dispositif d'appareil ménager selon l'une des revendications précédentes, **caractérisé en ce que** la pondération est au moins dépendante d'au moins une fonction cible (f ; g ; h) qui affecte au moins une valeur de fonction cible à un capteur de température (12, 14, 16, 18, 20, 22, 24, 26).

7. Appareil ménager avec un dispositif d'appareil ménager selon l'une des revendications précédentes.

8. Procédé d'exploitation d'un dispositif d'appareil ménager selon l'une des revendications 1 à 6, avec un agencement de capteurs (10) avec au moins deux capteurs de température (12, 14, 16, 18, 20, 22, 24, 26), respectivement prévus pour une détermination d'une caractéristique de capteur ($T_1$, $T_2$, $T_3$, $T_4$, $T_5$, $T_6$, $T_7$, $T_8$), et avec au moins une unité d'évaluation (28), dans lequel l'au moins une unité d'évaluation (28) détermine une caractéristique de température ($T_G$) via une pondération d'au moins deux caractéristiques de capteur ($T_1$, $T_2$, $T_3$, $T_4$, $T_5$, $T_6$, $T_7$, $T_8$) des au moins deux capteurs de température (12, 14, 16, 18, 20, 22, 24, 26), qui se différencie d'un simple calcul de moyenne, dans lequel la pondération présente au moins un facteur de pondération ($C_1$, $C_2$, $C_3$, $C_4$, $C_5$, $C_6$, $C_7$, $C_8$) de valeur nulle et dans lequel la pondération est au moins dépendante d'au moins une caractéristique de capteur ($T_1$, $T_2$, $T_3$, $T_4$, $T_5$, $T_6$, $T_7$, $T_8$) d'au moins une mesure antérieure.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2148554 A